# EUROPEAN PATENT APPLICATION

(11) **EP 4 596 299 A1**
(43) Date of publication of application: **06.08.2025**
(21) Application number: 22962482.0
(22) Date of filing: 21.10.2022
(51) Int. Cl.: B60L 7/10

(54) **ENERGY RECOVERY METHOD, APPARATUS, DEVICE, READABLE STORAGE MEDIUM AND VEHICLE**

(71) Applicant: Shenzhen Yinwang Intelligent Technologies Co., Ltd., Shenzhen, Guangdong 518129 (CN)
(72) Inventor: JIANG, Siwen, Shenzhen, Guangdong 518129 (CN); CHAI, Benben, Shenzhen, Guangdong 518129 (CN); PENG, Lei, Shenzhen, Guangdong 518129 (CN); WANG, Junhan, Shenzhen, Guangdong 518129 (CN)
(74) Representative: Thun, Clemens
(86) International application number: PCT/CN2022/126818
(87) International publication number: WO 2024/082300

(57) **Abstract**

This application discloses an energy regeneration method and apparatus, a device, a readable storage medium, and a vehicle, and pertains to the field of vehicle technologies. The method includes: determining a target regeneration intensity of a vehicle based on obtained regeneration intensity reference information of the vehicle, where the regeneration intensity reference information includes driving configuration information of the vehicle and a road surface adhesion capability of a road on which the vehicle is located; and determining a target regeneration torque of the vehicle based on the target regeneration intensity, and performing energy regeneration based on the target regeneration torque. The driving configuration information can reflect personalized selection of a user, and the road surface adhesion capability can reflect an actual driving environment. Therefore, the method can meet both a user requirement and a requirement of the actual driving environment, so that the determined target regeneration intensity is more accurate. Further, the target regeneration torque determined based on the accurate target regeneration intensity is also more accurate, and effect of energy regeneration performed based on the accurate target regeneration torque is better.

## Description

### TECHNICAL FIELD

This application relates to the field of vehicle technologies, and in particular, to an energy regeneration method and apparatus, a device, a readable storage medium, and a vehicle.

### BACKGROUND

In the field of vehicle technologies, energy regeneration means that in a process in which a motor participates in vehicle braking, the motor does not serve as a power source for output, but serves as a generator, and converts some kinetic energy of a vehicle into electrical energy and stores the electrical energy in a battery. An energy regeneration intensity is controlled by a regeneration torque of the motor. Therefore, how to adaptively determine the regeneration torque is the key to improve energy regeneration effect.

### SUMMARY

This application provides an energy regeneration method and apparatus, a device, a readable storage medium, and a vehicle. The method can be used to determine a more accurate target regeneration torque.

According to a first aspect, this application provides an energy regeneration method. The method includes: obtaining regeneration intensity reference information of a vehicle, where the regeneration intensity reference information includes driving configuration information of the vehicle and a road surface adhesion capability of a road on which the vehicle is located; determining a target regeneration intensity of the vehicle based on the regeneration intensity reference information; and determining a target regeneration torque of the vehicle based on the target regeneration intensity, and performing energy regeneration based on the target regeneration torque.

The driving configuration information can reflect personalized selection of a user, and the road surface adhesion capability can reflect an actual driving environment. Therefore, the target regeneration intensity of the vehicle is determined based on the driving configuration information of the vehicle and the road surface adhesion capability of the road on which the vehicle is located. The method can meet both a user requirement and a requirement of the actual driving environment, so that the determined target regeneration intensity is more accurate. Further, the target regeneration torque determined based on the accurate target regeneration intensity is also more accurate, and effect of energy regeneration performed based on the accurate target regeneration torque is better.

In a possible implementation, a configured regeneration intensity of the vehicle can be determined based on the driving configuration information. The configured regeneration intensity is a fixed energy regeneration intensity corresponding to the driving configuration information. The configured regeneration intensity is adjusted based on the road surface adhesion capability, and the target regeneration intensity of the vehicle is obtained. Therefore, in comparison with a manner of determining a fixed energy regeneration intensity only based on configuration information, in this method, a dynamic target regeneration intensity can be determined based on the road surface adhesion capability, so that a manner of determining the target regeneration intensity is more flexible and accurate.

In a possible implementation, a manner of adjusting the configured regeneration intensity based on the road surface adhesion capability may be as follows: when the road surface adhesion capability meets an instability boundary condition, using a reference regeneration intensity as the target regeneration intensity of the vehicle, where the reference regeneration intensity is less than a regeneration intensity threshold; or when the road surface adhesion capability does not meet an instability boundary condition, using the configured regeneration intensity as the target regeneration intensity of the vehicle. Therefore, when the road surface adhesion capability does not meet the instability boundary condition, it can be ensured that the determined target regeneration intensity is less than the regeneration intensity threshold. This effectively avoids an instability risk caused by an excessively large target regeneration intensity, and further effectively reduces a quantity of intervention times of a stability control function. In addition, if the stability control function is intervened in an energy regeneration process, an energy regeneration withdrawal may occur. Therefore, reducing the quantity of intervention times of the stability control function avoids the energy regeneration withdrawal caused by the intervention of the stability control function of a chassis, and further avoids vehicle's unexpected jerking caused by the energy regeneration withdrawal.

In a possible implementation, there is a correspondence between driving configuration information and an energy regeneration intensity, and the configured regeneration intensity corresponding to the driving configuration information of the vehicle is obtained based on the correspondence between driving configuration information and energy regeneration intensity. The driving configuration information includes at least one of a driving mode and a road mode. The configured regeneration intensity is obtained based on the correspondence between driving configuration information and energy regeneration intensity, so that the configured regeneration intensity can match an expected regeneration intensity of the driving configuration information.

In a possible implementation, a manner of determining the target regeneration torque of the vehicle based on the target regeneration intensity may be as follows: obtaining a basic regeneration torque based on the target regeneration intensity and a current vehicle speed of the vehicle; obtaining regeneration torque reference information corresponding to the vehicle, where the regeneration torque reference information is information that affects a deceleration value of the vehicle under the basic regeneration torque; and adjusting the basic regeneration torque based on the regeneration torque reference information, and obtaining the target regeneration torque of the vehicle based on an adjustment result. Therefore, on the basis of obtaining the basic regeneration torque, the basic regeneration torque is adjusted based on the regeneration torque reference information, so that the target regeneration torque obtained based on the adjustment result is more accurate.

In a possible implementation, when an accelerator pedal of the vehicle controls acceleration and deceleration of the vehicle, in addition to obtaining the basic regeneration torque based on the target regeneration intensity and the current vehicle speed of the vehicle, the basic regeneration torque may also be obtained with reference to an accelerator pedal opening of the vehicle. In this way, the method can be applied to a vehicle in a single-pedal mode, so that universal applicability of the energy regeneration method is improved, and the obtained basic regeneration torque can be more accurate in the single-pedal mode.

In a possible implementation, the regeneration torque reference information may include at least one of historical energy regeneration information of the vehicle, a quantity of passengers, and slope information of the road on which the vehicle is located. A manner of adjusting the basic regeneration torque based on the regeneration torque reference information may be as follows: determining an adjustment coefficient based on at least one of the historical energy regeneration information, the quantity of passengers, and the slope information, where the adjustment coefficient indicates a degree of impact of the regeneration torque reference information on the deceleration value of the vehicle; and adjusting the basic regeneration torque based on the adjustment coefficient.

Therefore, when the regeneration torque reference information includes the historical energy regeneration information of the vehicle, the target regeneration torque obtained based on the adjustment coefficient determined based on the historical energy regeneration information better meets the user requirement. When the regeneration torque reference information includes the quantity of passengers, the target regeneration torque obtained based on the adjustment coefficient determined based on the quantity of passengers is more accurate. In this way, when vehicle mass varies depending on different quantities of passengers, vehicle deceleration values at a same target regeneration intensity and a same vehicle speed are basically the same. This ensures consistent driving experience and passenger experience when the different quantities of passengers take the vehicle. When the regeneration torque reference information includes the slope information, the target regeneration torque obtained based on the adjustment coefficient determined based on the slope information is more accurate. In this way, on roads with different slops, vehicle deceleration values at a same target regeneration intensity and a same vehicle speed are basically the same. This ensures consistent driving experience and passenger experience when the vehicle travels on an uphill, a flat road, and a downhill.

In a possible implementation, after the adjustment result is obtained, an adjusted regeneration torque is obtained based on the adjustment result. When the adjusted regeneration torque is greater than a maximum allowable regeneration torque of a motor of the vehicle, the maximum allowable regeneration torque is used as the target regeneration torque of the vehicle; or when the adjusted regeneration torque is not greater than a maximum allowable regeneration torque, the adjusted regeneration torque is used as the target regeneration torque of the vehicle. Therefore, the adjusted regeneration torque obtained after the adjustment can be limited. This ensures that the finally determined target regeneration torque is not greater than the maximum allowable regeneration torque of the motor of the vehicle, protects the motor and a battery, and further improves accuracy of the determined target regeneration torque.

In a possible implementation, the maximum allowable regeneration torque of the motor may be obtained based on a chargeable power of the battery of the vehicle and at least one of a regenerative capability and a rotational speed of the motor. The accurate maximum allowable regeneration torque of the motor is obtained, so that a limitation, based on the maximum allowable regeneration torque, on the adjusted regeneration torque is more accurate.

In a possible implementation, the vehicle includes a plurality of motors. After the target regeneration torque of the vehicle is determined based on the target regeneration intensity, an allocation ratio among the plurality of motors may be further determined. The target regeneration torque is divided into a plurality of regeneration torques based on the allocation ratio. The plurality of regeneration torques are in one-to-one correspondence with the plurality of motors. In this case, the performing energy regeneration based on the target regeneration torque includes: controlling the plurality of motors to perform energy regeneration based on the corresponding regeneration torques. Therefore, the target regeneration torque can be allocated to the plurality of motors, and the plurality of motors implement energy regeneration of the vehicle.

In a possible implementation, a manner of determining the allocation ratio among the plurality of motors may be as follows: when the road surface adhesion capability meets the instability boundary condition, determining the allocation ratio among the plurality of motors to be a fixed allocation ratio; or when the road surface adhesion capability does not meet the instability boundary condition, determining the allocation ratio among the plurality of motors based on the driving configuration information.

For example, the plurality of motors include a front motor and a rear motor. A manner of determining the allocation ratio among the plurality of motors based on the driving configuration information may be as follows: obtaining the driving mode of the vehicle based on the driving configuration information; and when the driving mode is energy saving and a motor enabling status is dual-motor enabled, determining total regeneration efficiency of the front motor and the rear motor at different allocation ratios based on motor drive efficiency, and using an allocation ratio when the total regeneration efficiency is highest as an allocation ratio between the front motor and the rear motor, to regenerate as much energy as possible; or when the driving mode is comfort or sport, obtaining a first ratio between a front-wheel vehicle speed and a rear-wheel vehicle speed, and a second ratio between a vehicle body front load and a vehicle body rear load, and determining an allocation ratio between the front motor and the rear motor based on at least one of the first ratio and the second ratio, so that tire adhesion utilization is optimal and stability is highest.

For example, the plurality of motors include a front motor, a rear left motor, and a rear right motor. A manner of determining the allocation ratio among the plurality of motors based on the driving configuration information may be as follows: obtaining a front-to-rear ratio among the front motor, the rear left motor, and the rear right motor based on the driving configuration information; determining a steering direction of the vehicle based on steering wheel angle information, and determining a third ratio between the rear left motor and the rear right motor based on the steering direction; determining a fourth ratio between the rear left motor and the rear right motor based on road surface adhesion statuses of wheels on left and right sides; determining a left-to-right ratio between the front motor and the rear motors based on at least one of the third ratio and the fourth ratio; and determining an allocation ratio among the front motor, the rear left motor, and the rear right motor based on the front-to-rear ratio and the left-to-right ratio, to improve handling stability of the vehicle.

In a possible implementation, the obtaining regeneration intensity reference information of a vehicle includes: when the vehicle meets an energy regeneration condition, obtaining the regeneration intensity reference information of the vehicle. When the accelerator pedal of the vehicle controls acceleration and deceleration of the vehicle, the energy regeneration condition includes the following content: The accelerator pedal opening of the vehicle is less than an opening threshold, a gear is a traveling gear, and the stability control function is not enabled. When the accelerator pedal of the vehicle controls acceleration of the vehicle, and a brake pedal of the vehicle controls deceleration of the vehicle, the energy regeneration condition includes the following content: The accelerator pedal of the vehicle is not pressed, a gear is a traveling gear, and the stability control function is not enabled.

Therefore, energy regeneration is started when the energy regeneration condition is met, so that the vehicle starts energy regeneration in a scenario in which energy regeneration can be performed, and no energy regeneration error occurs. In addition, the single-pedal mode and a non-single-pedal mode each include a corresponding energy regeneration condition, so that a condition for triggering energy regeneration is more accurate, and the energy regeneration method is applicable to the single-pedal mode and the non-single-pedal mode.

According to a second aspect, this application provides an energy regeneration apparatus. The apparatus includes:
an obtaining unit, configured to obtain regeneration intensity reference information of a vehicle, where the regeneration intensity reference information includes driving configuration information of the vehicle and a road surface adhesion capability of a road on which the vehicle is located;
a determining unit, configured to determine a target regeneration intensity of the vehicle based on the regeneration intensity reference information, where
the determining unit is further configured to determine a target regeneration torque of the vehicle based on the target regeneration intensity; and
a regeneration unit, configured to perform energy regeneration based on the target regeneration torque.

In a possible implementation, the determining unit is configured to: determine a configured regeneration intensity of the vehicle based on the driving configuration information; and adjust the configured regeneration intensity based on the road surface adhesion capability, and obtain the target regeneration intensity of the vehicle.

In a possible implementation, the determining unit is configured to: when the road surface adhesion capability meets an instability boundary condition, use a reference regeneration intensity as the target regeneration intensity of the vehicle, where the reference regeneration intensity is less than a regeneration intensity threshold; or when the road surface adhesion capability does not meet an instability boundary condition, use the configured regeneration intensity as the target regeneration intensity of the vehicle.

In a possible implementation, the determining unit is configured to obtain, based on a correspondence between driving configuration information and an energy regeneration intensity, the configured regeneration intensity that is of the vehicle and that corresponds to the driving configuration information. The driving configuration information includes at least one of a driving mode and a road mode.

In a possible implementation, the determining unit is configured to: obtain a basic regeneration torque based on the target regeneration intensity and a current vehicle speed of the vehicle; obtain regeneration torque reference information corresponding to the vehicle, where the regeneration torque reference information is information that affects a deceleration value of the vehicle under the basic regeneration torque; and adjust the basic regeneration torque based on the regeneration torque reference information, and obtain the target regeneration torque of the vehicle based on an adjustment result.

In a possible implementation, an accelerator pedal of the vehicle controls acceleration and deceleration of the vehicle. The determining unit is configured to obtain the basic regeneration torque based on the target regeneration intensity, the current vehicle speed of the vehicle, and an accelerator pedal opening of the vehicle.

In a possible implementation, the regeneration torque reference information includes at least one of historical energy regeneration information of the vehicle, a quantity of passengers, and slope information of the road on which the vehicle is located. The determining unit is configured to: determine an adjustment coefficient based on at least one of the historical energy regeneration information, the quantity of passengers, and the slope information, where the adjustment coefficient indicates a degree of impact of the regeneration torque reference information on the deceleration value of the vehicle; and adjust the basic regeneration torque based on the adjustment coefficient.

In a possible implementation, the determining unit is configured to: obtain an adjusted regeneration torque based on the adjustment result; and when the adjusted regeneration torque is greater than a maximum allowable regeneration torque of a motor of the vehicle, use the maximum allowable regeneration torque as the target regeneration torque of the vehicle; or when the adjusted regeneration torque is not greater than a maximum allowable regeneration torque, use the adjusted regeneration torque as the target regeneration torque of the vehicle.

In a possible implementation, the obtaining unit is further configured to obtain the maximum allowable regeneration torque of the motor based on a chargeable power of a battery of the vehicle and at least one of a regenerative capability and a rotational speed of the motor.

In a possible implementation, the vehicle includes a plurality of motors. The apparatus further includes:
an allocation unit, configured to: determine an allocation ratio among the plurality of motors; and divide the target regeneration torque into a plurality of regeneration torques based on the allocation ratio, where the plurality of regeneration torques are in one-to-one correspondence with the plurality of motors; and
the regeneration unit, configured to control the plurality of motors to perform energy regeneration based on the corresponding regeneration torques.

In a possible implementation, the allocation unit is configured to: when the road surface adhesion capability meets the instability boundary condition, determine the allocation ratio among the plurality of motors to be a fixed allocation ratio; or when the road surface adhesion capability does not meet the instability boundary condition, determine the allocation ratio among the plurality of motors based on the driving configuration information.

In a possible implementation, the obtaining unit is configured to: when the vehicle meets an energy regeneration condition, obtain the regeneration intensity reference information of the vehicle.

In a possible implementation, when the accelerator pedal of the vehicle controls acceleration and deceleration of the vehicle, the energy regeneration condition includes the following content: The accelerator pedal opening of the vehicle is less than an opening threshold, a gear is a traveling gear, and a stability control function is not enabled; or when the accelerator pedal of the vehicle controls acceleration of the vehicle, and a brake pedal of the vehicle controls deceleration of the vehicle, the energy regeneration condition includes the following content: The accelerator pedal of the vehicle is not pressed, a gear is a traveling gear, and a stability control function is not enabled.

According to a third aspect, this application provides a vehicle. The vehicle includes the energy regeneration apparatus shown in the second aspect.

According to a fourth aspect, this application provides a computer device, and the computer device includes a processor and a memory. The memory is configured to store a software program and a module, and the processor runs or executes the software program and/or the module stored in the memory, so that the computer device implements the method according to any one of the first aspect or the possible implementations of the first aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in embodiments of this application.

Optionally, the computer device may be deployed on a public cloud to provide an energy regeneration service.

According to a fifth aspect, this application provides a computer program (product). The computer program (product) includes computer program code. When the computer program code is run by a computer, the computer is enabled to perform the method according to any one of the first aspect or the possible implementations of the first aspect.

According to a sixth aspect, this application provides a computer-readable storage medium. The computer-readable storage medium is configured to store program code executed by a processor. The program code is for implementing the method according to any one of the first aspect or the possible implementations of the first aspect.

According to a seventh aspect, a chip is provided, and includes a processor. The processor is configured to invoke instructions from a memory, and run the instructions stored in the memory, so that a communication device on which the chip is installed performs the method according to any one of the first aspect or the possible implementations of the first aspect.

According to an eighth aspect, another chip is provided, and includes an input interface, an output interface, a processor, and a memory. The input interface, the output interface, the processor, and the memory are connected to each other through an internal connection path. The processor is configured to execute code in the memory. When the code is executed, the processor is configured to perform the method according to any one of the first aspect or the possible implementations of the first aspect.

It should be understood that, for beneficial effects achieved by the technical solutions in the second aspect to the eighth aspect and the corresponding possible implementations in this application, refer to the foregoing technical effects in the first aspect and the corresponding possible implementations thereof. Details are not described herein again.

### BRIEF DESCRIPTION OF DRAWINGS

FIG. 1 is a diagram of an implementation environment according to an embodiment of this application;
FIG. 2 is a diagram of another implementation environment according to an embodiment of this application;
FIG. 3 is a flowchart of an energy regeneration method according to an embodiment of this application;
FIG. 4 is a flowchart of determining a target regeneration torque according to an embodiment of this application;
FIG. 5 is a diagram of an energy regeneration apparatus according to an embodiment of this application; and
FIG. 6 is a diagram of a structure of a computer device according to an embodiment of this application.

### DESCRIPTION OF EMBODIMENTS

To make the objectives, technical solutions, and advantages of this application clearer, the following further describes the implementations of this application in detail with reference to the accompanying drawings.

With development of vehicle technologies, a vehicle with an electric drive system, namely, an electric vehicle, has been widely used. The electric vehicle may be a pure electric vehicle, or may be a hybrid vehicle mixed with electric power (for example, a fuel-electric hybrid vehicle). The electric vehicle is driven by using a motor, and drive electrical energy of the motor comes from an in-vehicle chargeable energy storage system or another energy storage apparatus, such as a battery. When the vehicle brakes or coasts, if the motor does not work, resistance generated to the vehicle is small. However, if a negative torque is given to the motor, the motor can generate a magnetic field to enter a power generation state according to a principle of a generator. At the same time when resistance is generated to a wheel, kinetic energy of the vehicle is converted into electrical energy and the electrical energy is stored in the battery. That is, this is an energy regeneration process. In this way, the motor participates in braking to perform energy regeneration, so that energy utilization can be improved, and an endurance mileage of the electric vehicle can be extended.

In a related technology, a plurality of energy regeneration intensity levels are usually set for a user to perform personalized selection. However, energy regeneration torques at different vehicle speeds are usually fixed at different energy regeneration intensity levels. Although a use expectation of the user is met, energy regeneration effect is poor because other factors affecting energy regeneration are not considered. For example, in some special scenarios such as icy and snowy roads, a high-level energy regeneration intensity selected by the user may easily cause an instability risk such as fishtailing or skidding. For a vehicle with a stability control function, an intervention of the stability control function may further cause energy regeneration to stop, resulting in unexpected jerking of the vehicle.

Energy regeneration is mainly affected by factors such as an environmental factor (for example, a road condition) and another vehicle factor (for example, vehicle mass). If a road surface condition is recognized to adjust the energy regeneration intensity, and an adjustment solution is that a smaller road surface adhesion coefficient indicates a higher energy regeneration intensity, fishtailing or skidding also easily occurs when the road surface adhesion coefficient is small, and personalized selection of the user is not considered. In a manner of adjusting the energy regeneration torque by calculating vehicle mass in real time, the vehicle mass is calculated by using a dynamics formula. Therefore, parameter values such as a vehicle speed and an acceleration value need to be dynamically collected. However, a requirement on dynamic precision of the parameters is high, and calculation is difficult. In addition, an error caused by a parameter change directly affects energy regeneration effect, and impact caused by the road condition is not considered.

An embodiment of this application provides an energy regeneration method. According to the method, an accurate target regeneration intensity can be determined with reference to driving configuration information selected by a user and a road surface adhesion capability of an actual road, and an accurate target regeneration torque can be further obtained based on the target regeneration intensity to perform energy regeneration. The method not only can meet a personalized requirement of the user, but also can avoid a vehicle's instability phenomenon caused by energy regeneration, thereby ensuring energy regeneration effect.

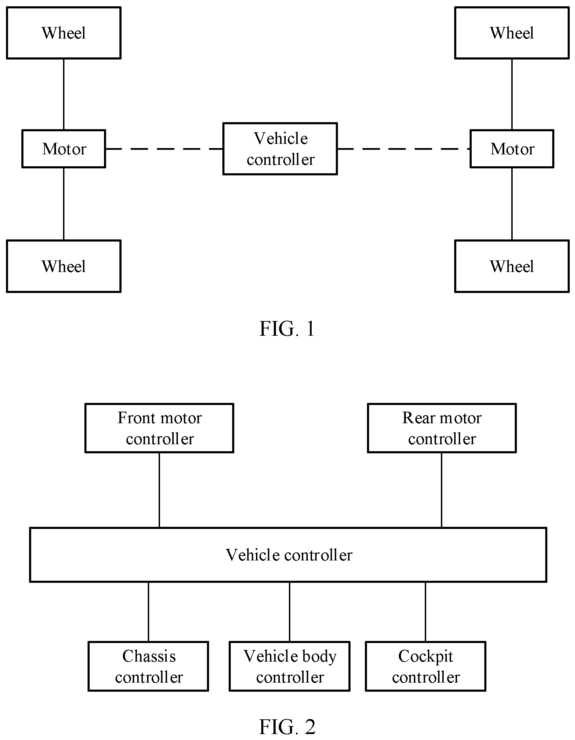

FIG. 1 is a diagram of an implementation environment according to an embodiment of this application. As shown in FIG. 1, the implementation environment includes a vehicle controller, motors, and wheels. For example, the vehicle controller obtains regeneration intensity reference information of a vehicle, where the regeneration intensity reference information includes driving configuration information of the vehicle and a road surface adhesion capability of a road on which the vehicle is located; determines a target regeneration intensity of the vehicle based on the regeneration intensity reference information; and determines a target regeneration torque of the vehicle based on the target regeneration intensity, and controls the motor to output the target regeneration torque after determining the accurate target regeneration torque. The motor outputs the target regeneration torque to apply resistance to rotating wheels, and performs energy regeneration according to a generator principle.

In embodiments of this application, the vehicle controller may be a vehicle control module (vehicle control unit, VCU). Optionally, a quantity of wheels and a quantity of motors are not limited in embodiments of this application. For example, there may be four wheels and two motors, as shown in FIG. 1. A type of motor is not limited in embodiments of this application either. For example, the motor may be a three-in-one motor. The three-in-one motor is a motor that integrates a motor, a reducer, and an inverter.

For example, FIG. 2 shows another implementation environment according to an embodiment of this application. A vehicle controller is connected to a chassis controller, a cockpit controller, a vehicle body controller, a front motor controller, and a rear motor controller. The chassis controller, the cockpit controller, and the vehicle body controller are information source components, and are configured to feed back information in real time. The vehicle controller obtains, based on the information fed back by the chassis controller, the cockpit controller, and the vehicle body controller, regeneration intensity reference information and regeneration torque reference information that are required for energy regeneration. For example, the vehicle controller obtains driving configuration information of a vehicle through the cockpit controller, and obtains an accelerator pedal opening of the vehicle through the vehicle body controller. The front motor controller and the rear motor controller function as actuators to execute a request of a target regeneration torque of the vehicle controller.

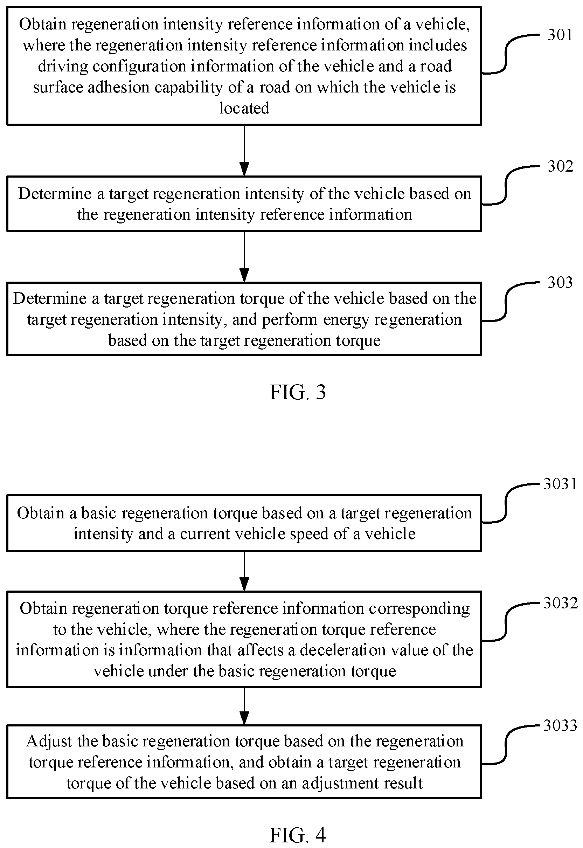

FIG. 3 is a flowchart of an energy regeneration method according to an embodiment of this application. For example, the method may be performed by the vehicle controller shown in FIG. 1. As shown in FIG. 3, the method includes but is not limited to the following step 301 to step 303.

Step 301: Obtain regeneration intensity reference information of a vehicle, where the regeneration intensity reference information includes driving configuration information of the vehicle and a road surface adhesion capability of a road on which the vehicle is located.

In this embodiment of this application, the regeneration intensity reference information is information that affects a regeneration intensity of energy regeneration performed on the vehicle, and the regeneration intensity indicates a value of an intensity of energy regeneration to be performed. Usually, the regeneration intensity is positively correlated with a regeneration torque of a motor, an amount of regenerated energy, and a deceleration value of the vehicle. For example, a larger regeneration intensity indicates a larger amount of regenerated energy, and a larger deceleration value of the vehicle. Optionally, the regeneration intensity usually includes a plurality of intensity levels, for example, strong, medium, and weak. Alternatively, any quantity of levels are set in an order from strong to weak, and intensity differences between adjacent levels may be the same or different.

The driving configuration information of the vehicle is vehicle configuration information of a driver through personalized selection, and is for representing an energy regeneration intensity expected by a user. The driving configuration information is not limited in this embodiment of this application. Optionally, the driving configuration information may include at least one of a driving mode and a road mode. For example, the driving mode may include an energy saving mode, a comfort mode, a sport mode, a launch mode, or the like. The road mode may include a wet and slippery road mode, a snowy road mode, an icy road mode, an off-road mode, or the like. Different driving modes and different road modes usually correspond to different energy regeneration intensities. Optionally, if the vehicle is in an autonomous driving mode, the driving mode in the driving configuration information may be represented by a configured following distance. A smaller following distance indicates a more radical driving mode of the vehicle, and different following distances correspond to different energy regeneration intensities.

In a possible implementation, a road surface status is further actively recognized to correct the road mode in the driving configuration information. Alternatively, when the driving configuration information does not include the road mode, the road surface status is actively recognized to obtain the road mode. Optionally, a manner of actively recognizing the road surface status may be as follows: capturing, by using an image capturing device installed on the vehicle, an image on a road surface of the road on which the vehicle is located, performing image recognition on the captured image on the road surface, and automatically determining a road mode based on an image recognition result. If the road mode obtained through automatic recognition is different from the road mode in the driving configuration information, the driver may be prompted to change the road mode, or the road mode in the driving configuration information is directly replaced with the road mode obtained through automatic recognition.

In this embodiment of this application, the road surface adhesion capability indicates a value of an adhesion force between tires and the road surface when the vehicle travels. A stronger road surface adhesion capability indicates a larger value of the adhesion force between the tires and the road surface, and that the vehicle is less likely to experience an instability phenomenon such as tire spinning, vehicle side skidding, or fishtailing. Optionally, the road surface adhesion capability may be represented by an accurate value of a road surface adhesion coefficient, or may be represented by a range value of a road surface adhesion coefficient. A manner of representing the road surface adhesion capability is not limited in this embodiment of this application. Regardless of a specific representation manner to be used, the road surface adhesion coefficient may be positively correlated with the road surface adhesion capability. A larger road surface adhesion coefficient indicates a stronger road surface adhesion capability.

The road surface adhesion coefficient is a ratio of a maximum limit value (an adhesion force) of a tangential reaction force of the ground on the tires to a normal reaction force of drive wheels. The drive wheels are wheels that convert energy into kinetic energy to enable the vehicle to move forward or backward. When the vehicle travels, good road surface adhesion is needed to ensure that a minimum adhesion coefficient required when the vehicle fully plays a drive force cannot be greater than the road surface adhesion coefficient. Otherwise, an instability phenomenon of the vehicle may occur. Optionally, the road surface adhesion coefficient mainly depends on the road surface status (for example, a dry road surface, an asphalt road surface, a concrete road surface, or an icy and snowy road surface), a tire structure, a tread pattern, a traveling speed, and the like. Usually, the road surface adhesion coefficient on the icy and snowy road surface or on a wet and slippery road surface is small, and a probability of the instability phenomenon of the vehicle is high.

A manner of obtaining the road surface adhesion coefficient is not limited in this embodiment of this application, and may be any method for detecting, in real time, an adhesion coefficient between the tires and the road surface in a vehicle traveling process. For example, a mechanical property of the tires is analyzed to find a relationship between a mechanical parameter and an adhesion coefficient, so that the mechanical parameter is detected by using a measurement device, and the adhesion coefficient is calculated. Alternatively, a relationship between both an influence factor of a friction process and each external factor that affects the friction process and an adhesion coefficient is analyzed, so that each influence factor is measured by using a measurement apparatus, and the adhesion coefficient is estimated. Alternatively, an adhesion ratio-slip ratio change curve on different road surfaces is obtained in advance, and a maximum adhesion ratio in an adhesion ratio-slip ratio change curve on any road surface is a road surface adhesion coefficient of the road surface. Alternatively, the road surface adhesion coefficient is determined based on real-time positioning information of the vehicle, weather information, and road surface information recognized by using the image capturing device installed on the vehicle.

Therefore, according to the foregoing method, the driving configuration information of the vehicle and the road surface adhesion capability of the road on which the vehicle is located can be obtained. The regeneration intensity reference information is not limited in this embodiment of this application. In addition to the driving configuration information of the vehicle and the road surface adhesion capability of the road on which the vehicle is located, other information that affects the regeneration intensity of energy regeneration performed on the vehicle may be further included.

In a possible implementation, before the regeneration intensity reference information of the vehicle is obtained, whether the vehicle meets an energy regeneration condition is first determined. When the vehicle meets the energy regeneration condition, energy regeneration is triggered, to obtain the regeneration intensity reference information of the vehicle. In this embodiment of this application, the energy regeneration condition is not limited. The energy regeneration condition is related to an environmental factor required by the vehicle to perform energy regeneration. For example, the vehicle needs to perform energy regeneration in a braking state or a coasting state. Therefore, energy regeneration is started when the energy regeneration condition is met, so that the vehicle starts energy regeneration in a scenario in which energy regeneration can be performed, and no energy regeneration error occurs.

For example, when an accelerator pedal of the vehicle controls acceleration and deceleration of the vehicle, namely, a single-pedal mode, opening information of the accelerator pedal determines a traveling status of the vehicle. For example, if an accelerator pedal opening is less than an opening threshold, the vehicle is in a braking state. If an accelerator pedal opening is equal to an opening threshold, the vehicle is in a coasting state. If an accelerator pedal opening is greater than an opening threshold, the vehicle is in a drive state. That is, the energy regeneration condition may include the following content: The accelerator pedal opening of the vehicle is less than the opening threshold, a gear is a traveling gear, and a stability control function is not enabled.

When an accelerator pedal of the vehicle controls acceleration of the vehicle, and a brake pedal of the vehicle controls deceleration of the vehicle, namely, a non-single-pedal mode, that the accelerator pedal is not pressed indicates that the vehicle is in a non-drive state. That is, the energy regeneration condition may include the following content: The accelerator pedal of the vehicle is not pressed, a gear is a traveling gear, and a stability control function is not enabled. Therefore, the energy regeneration method provided in this embodiment of this application can be applied to vehicles in a single-pedal mode and vehicles in a non-single-pedal mode. In addition, the single-pedal mode and the non-single-pedal mode each include a corresponding energy regeneration condition, so that a condition for triggering energy regeneration is more accurate.

In this embodiment of this application, the stability control function is a function of assisting the vehicle in avoiding the instability phenomenon. For example, the stability control function includes an anti-lock braking system (anti-lock braking system, ABS), a dynamic traction control (dynamic traction control, DTC) system, an automatic emergency braking (automatic emergency braking, AEB) assistant, and the like. When the stability control function determines that the vehicle may experience the instability phenomenon, the stability control function automatically starts intervention to control the vehicle. Therefore, if the stability control function is enabled, it indicates that the vehicle is not suitable for energy regeneration.

The ABS is configured to automatically control a value of a braking force during vehicle braking, so that wheels are not locked and are in a state of simultaneous rolling and slipping (with a slip ratio about 20%). This ensures that an adhesion force between the wheels and the ground is at a maximum value. The DTC system is configured to control traction of the tires by controlling a rotational speed of an engine, to prevent the tires from slipping. The AEB assistant is configured to detect a distance and a relative speed of a target ahead, and take a measure to assist the driver in avoiding or mitigating collision when the driver brakes too late, the braking force is too small, or no braking measure is taken. Then, that the stability control function is not enabled indicates that any one of the ABS, the DTC system, or the AEB assistant of the vehicle is not intervened.

Step 302: Determine a target regeneration intensity of the vehicle based on the regeneration intensity reference information.

In this embodiment of this application, after the regeneration intensity reference information is obtained, the target regeneration intensity of the vehicle may be determined based on the regeneration intensity reference information. Optionally, a configured regeneration intensity of the vehicle is determined based on the regeneration intensity reference information; and then the configured regeneration intensity is adjusted based on the road surface adhesion capability, and the target regeneration intensity of the vehicle is obtained. In comparison with a directly obtained configured regeneration intensity, the target regeneration intensity adjusted based on the road surface adhesion capability considers an instability risk caused by the road surface adhesion capability. Therefore, the determined target regeneration intensity is more accurate while a personalized requirement of the user is met.

In a possible implementation, that a configured regeneration intensity of the vehicle is determined based on the regeneration intensity reference information includes: The configured regeneration intensity that is of the vehicle and that corresponds to the regeneration intensity reference information is obtained based on a correspondence between regeneration intensity reference information and an energy regeneration intensity. Optionally, when the regeneration intensity reference information includes the driving mode, a configured regeneration intensity that is of the vehicle and that corresponds to the driving mode is obtained based on a correspondence between a driving mode and an energy regeneration intensity; when the regeneration intensity reference information includes the road mode, a configured regeneration intensity that is of the vehicle and that corresponds to the road mode is obtained based on a correspondence between a road mode and an energy regeneration intensity; or when the regeneration intensity reference information includes the driving mode and the road mode, a configured regeneration intensity that is of the vehicle and that corresponds to the driving mode and the road mode is obtained based on a correspondence among a driving mode, a road mode, and an energy regeneration intensity.

For example, the energy regeneration intensity includes three levels: strong, medium, and weak. The correspondence among a driving mode, a road mode, and an energy regeneration intensity may be shown in Table 1. Therefore, after the regeneration intensity reference information is obtained, the corresponding configured regeneration intensity may be determined in Table 1 based on the driving mode in the regeneration intensity reference information and the road surface status.

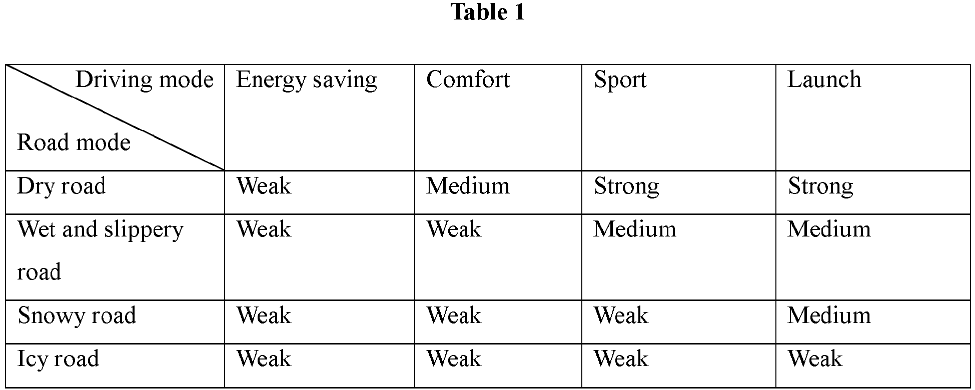

In this embodiment of this application, when the road surface adhesion capability is poor and the energy regeneration intensity is high, the instability phenomenon easily occurs. In this case, the energy regeneration intensity may be actively reduced when the road surface adhesion capability falls below a specific condition. Optionally, when the road surface adhesion capability meets an instability boundary condition, a reference regeneration intensity is used as the target regeneration intensity of the vehicle, where the reference regeneration intensity is less than a regeneration intensity threshold; or when the road surface adhesion capability does not meet an instability boundary condition, the configured regeneration intensity is used as the target regeneration intensity of the vehicle. Both the instability boundary condition and the regeneration intensity threshold may be set based on experience, or may be flexibly adjusted based on an application scenario. For example, the regeneration intensity threshold is set to medium, or the reference regeneration intensity is directly set to a lowest level in a plurality of levels included in the energy regeneration intensity.

Optionally, the instability boundary condition means a condition in which the vehicle is likely to experience the instability phenomenon but the instability phenomenon does not occur yet. This is because the stability control function of the vehicle is intervened when the instability phenomenon occurs, and the vehicle does not perform energy regeneration when the stability control function of the vehicle is intervened. For example, the instability boundary condition may be that the road on which the vehicle is located is a low-adhesion road. When the road surface adhesion capability indicates that the road on which the vehicle is located is a low-adhesion road, the road surface adhesion capability meets the instability boundary condition. When the road surface adhesion capability indicates that the road on which the vehicle is located is not a low-adhesion road, the road surface adhesion capability does not meet the instability boundary condition. For example, the low-adhesion road may be a road whose road surface adhesion coefficient is less than a coefficient threshold. The coefficient threshold may be set based on experience, or may be flexibly adjusted based on an application scenario. In this case, an example in which the road surface adhesion capability is the road surface adhesion coefficient is used. When the road surface adhesion coefficient is less than the coefficient threshold, regardless of a value of the configured regeneration intensity, the reference regeneration intensity is actively used as the target regeneration intensity of the vehicle.

Therefore, for the low-adhesion road such as a snowy surface road or an icy surface road, it can be ensured that the determined target regeneration intensity is less than the regeneration intensity threshold. This effectively avoids an instability risk caused by an excessively large target regeneration intensity, and further effectively reduces a quantity of intervention times of the stability control function. If the stability control function is intervened in an energy regeneration process, an energy regeneration withdrawal may occur. Therefore, reducing the quantity of intervention times of the stability control function avoids the energy regeneration withdrawal caused by the intervention of the stability control function of a chassis, and further avoids vehicle's unexpected jerking caused by the energy regeneration withdrawal.

After the reference regeneration intensity is used as the target regeneration intensity of the vehicle, prompt information "to ensure safety, the energy regeneration intensity is weakened" may be further displayed on an instrument panel of the vehicle, to provide a safety prompt to the driver. In this case, although the energy regeneration intensity corresponding to the driving mode selected by the driver is high, at a same vehicle speed, the target regeneration intensity remains low when the vehicle travels on a road surface with a small road surface adhesion coefficient.

Step 303: Determine a target regeneration torque of the vehicle based on the target regeneration intensity, and perform energy regeneration based on the target regeneration torque.

Usually, different energy regeneration intensities correspond to fixed energy regeneration torques at different vehicle speeds. After the target regeneration intensity is determined, a corresponding fixed regeneration torque may be determined based on the target regeneration intensity and a current vehicle speed of the vehicle. The fixed regeneration torque may be directly used as the target regeneration torque to perform energy regeneration. In this embodiment of this application, other information that affects the energy regeneration torque, namely, regeneration torque reference information, may be further considered, to obtain a more accurate target regeneration torque. After the more accurate target regeneration torque is obtained, the motor of the vehicle may be controlled to perform energy regeneration based on the target regeneration torque.

In a possible implementation, refer to FIG. 4. FIG. 4 shows a method for determining a target regeneration torque of a vehicle based on a target regeneration intensity according to an embodiment of this application. As shown in FIG. 4, the method for determining the target regeneration torque of the vehicle based on the target regeneration intensity includes but is not limited to the following step 3031 to step 3033.

Step 3031: Obtain a basic regeneration torque based on the target regeneration intensity and the current vehicle speed of the vehicle.

It can be learned from the foregoing content that, when the target regeneration intensity and the current vehicle speed of the vehicle are obtained, the corresponding basic regeneration torque can be obtained based on a correspondence among an energy regeneration intensity, a vehicle speed, and an energy regeneration torque.

In a possible implementation, for the single-pedal mode, accelerator pedal opening information may be further combined in a process of obtaining the basic regeneration torque. That is, the obtaining a basic regeneration torque based on the target regeneration intensity and the current vehicle speed of the vehicle includes: obtaining the basic regeneration torque based on the target regeneration intensity, the current vehicle speed of the vehicle, and the accelerator pedal opening of the vehicle. Similarly, the basic regeneration torque corresponding to the target regeneration intensity, the current vehicle speed of the vehicle, and the accelerator pedal opening of the vehicle may be obtained based on a correspondence among an energy regeneration intensity, a vehicle speed, an accelerator pedal opening, and an energy regeneration torque.

In addition to the foregoing manner of obtaining the basic regeneration torque based on the correspondence, the basic regeneration torque may also be obtained in a real-time calculation manner below. For example, a maximum acceleration value a of the vehicle is obtained based on the target regeneration intensity and the current vehicle speed of the vehicle, and coasting resistance F is obtained based on the maximum acceleration value a by using the following formula: F = m _{*} g _{*} cosφ _{*} a, where m is vehicle mass, g is a gravity acceleration value, and φ is a slope of the road on which the vehicle is located. Then, the basic regeneration torque is T = (F - f) _{*} r/i/η, where F is coasting resistance, f is rolling resistance, r is a tire radius, i is a motor reduction ratio, and η is transmission efficiency of an electric drive assembly.

Step 3032: Obtain the regeneration torque reference information corresponding to the vehicle, where the regeneration torque reference information is information that affects a deceleration value of the vehicle under the basic regeneration torque.

The regeneration torque reference information is not limited in this embodiment of this application, provided that different regeneration torque reference information of the vehicle under a same basic regeneration torque causes different deceleration values of the vehicle. For example, when a same vehicle performs energy regeneration based on a same basic regeneration torque, larger vehicle mass indicates a smaller deceleration value of the vehicle. The vehicle mass is related to a quantity of passengers taking the vehicle. A manner of obtaining the quantity of passengers in the vehicle may be as follows: detecting, by using a sensor, whether a seat belt corresponding to each seat is fastened, where if the seat belt is fastened, it is determined that there is one passenger on the seat; or detecting a weight of each seat by using a pressure sensor installed under each seat, where if the weight detected by the pressure sensor is greater than 15 kg, it is determined that there is one passenger on the seat. In this way, the quantity of passengers can be obtained.

For example, when a same vehicle performs energy regeneration based on a same basic regeneration torque, a larger uphill slope of the road indicates a smaller deceleration value of the vehicle, and a larger downhill slope of the road indicates a larger deceleration value of the vehicle. A manner of obtaining slope information of the road on which the vehicle is located may be as follows: installing a gyroscope at a center of mass position of the vehicle, and measuring an angle between a vehicle body plane and a horizontal reference plane in real time by using the gyroscope; symmetrically installing laser displacement sensors on left and right sides at front and rear ends of a vehicle body, and measuring displacement values of the vehicle body plane from the four points to the road surface in real time by using four laser displacement sensors; and obtaining a cross slope angle and a longitudinal slope angle of the road surface according to a geometric technique based on the displacement values measured by using any three laser displacement sensors. Alternatively, a manner of obtaining slope information of the road on which the vehicle is located may be as follows: obtaining a real-time acceleration value of the vehicle by using an acceleration sensor installed on the vehicle, and estimating a slope by using a filtering method according to a dynamics formula.

In addition, historical energy regeneration information of the vehicle is historical records of corresponding energy regeneration performed by a logged-in account of the vehicle. Optionally, each historical record of energy regeneration includes information such as a target regeneration intensity, a target regeneration torque, and regeneration duration. Therefore, a quantity of times the vehicle has used different levels of the energy regeneration torque can be obtained through statistics based on the historical energy regeneration information. Division of the different levels of the energy regeneration torque is not limited in this embodiment of this application. For example, levels of the energy regeneration torque may include high, medium, and low.

When the historical energy regeneration information indicates that a quantity of times the vehicle uses a high-level energy regeneration torque is greater than a threshold for a quantity of times, or the historical energy regeneration information indicates that a ratio of duration during which the vehicle performs energy regeneration based on a high-level energy regeneration torque to total historical energy regeneration duration is greater than a first ratio, it indicates that the user is used to a relatively large deceleration value when driving the vehicle, and a preference of a driving energy regeneration intensity corresponding to the account is strong energy regeneration. When the historical energy regeneration information indicates that a quantity of times the vehicle uses a low-level energy regeneration torque is greater than a threshold for a quantity of times, or the historical energy regeneration information indicates that a ratio of duration during which the vehicle performs energy regeneration based on a low-level energy regeneration torque to total historical energy regeneration duration is greater than a second ratio, it indicates that the user is used to a relatively small deceleration value when driving the vehicle, and a preference of a driving energy regeneration intensity corresponding to the account is weak energy regeneration. The threshold for the quantity of times, the first ratio, and the second ratio may be set based on experience, or may be flexibly adjusted based on an application scenario.

Therefore, based on the foregoing analysis, the regeneration torque reference information provided in this embodiment of this application may include at least one of the historical energy regeneration information of the vehicle, the quantity of passengers, and the slope information of the road on which the vehicle is located.

Step 3033: Adjust the basic regeneration torque based on the regeneration torque reference information, and obtain the target regeneration torque of the vehicle based on an adjustment result.

The regeneration torque reference information can affect the deceleration value of the vehicle. Therefore, the basic regeneration torque is adjusted based on the regeneration torque reference information, so that it can be ensured that deceleration values of the vehicle are basically the same in different regeneration torque reference information. This improves driving experience of the driver.

In a possible implementation, the adjusting the basic regeneration torque based on the regeneration torque reference information includes: determining an adjustment coefficient based on at least one of the historical energy regeneration information, the quantity of passengers, and the slope information, where the adjustment coefficient indicates a degree of impact of the regeneration torque reference information on the deceleration value of the vehicle; and adjusting the basic regeneration torque based on the adjustment coefficient.

Optionally, when the regeneration torque reference information includes the quantity of passengers, a basic energy regeneration torque may be increased as the quantity of passengers increases. Therefore, a manner of determining the adjustment coefficient based on the quantity of passengers may be as follows: setting an initial adjustment coefficient as a first reference value. Each time the quantity of passengers increases by a first quantity, the adjustment coefficient is increased by one fractional increment. The first reference value, the first quantity, and the fractional increment may all be flexibly adjusted. For example, the first reference value and the first quantity may be 1, and the fractional increment may be any value less than 1, for example, 0.1 or 0.2.

In a possible implementation, when there is the historical energy regeneration information, the fractional increment may be determined based on the historical energy regeneration information. For example, if the historical energy regeneration information indicates a large quantity of times the vehicle uses the high-level energy regeneration torque, a large fractional increment is determined; or if the historical energy regeneration information indicates a large quantity of times the vehicle uses the low-level energy regeneration torque, a small fractional increment is determined. Therefore, after a same vehicle determines a same target regeneration intensity, target regeneration torques at a same vehicle speed are different when quantities of passengers are different.

The target regeneration torque obtained based on the adjustment coefficient determined based on the quantity of passengers is more accurate. In this way, when vehicle mass varies depending on different quantities of passengers, vehicle deceleration values at the same target regeneration intensity and the same vehicle speed are basically the same. This ensures consistent driving experience and passenger experience when the different quantities of passengers take the vehicle. In addition, adjustment is directly performed based on the quantity of passengers, there is no need to calculate accurate vehicle mass, and there is a small error in obtaining the quantity of passengers. This ensures stability of the adjustment result.

When the regeneration torque reference information includes the slope information, a basic energy regeneration torque may be increased as the uphill slope increases, and the basic energy regeneration torque may be decreased as the downhill slope increases. Therefore, a manner of determining the adjustment coefficient based on the slope information may be as follows: setting an initial adjustment coefficient as a second reference value. If the slope information indicates that each time a first reference degree is increased for the uphill slope, the adjustment coefficient is increased by one first fractional increment. If the slope information indicates that each time a second reference degree is increased for the downhill slope, the adjustment coefficient is decreased by one second fractional increment.

Optionally, the second reference value may be flexibly adjusted. For example, the second reference value is 1. Both the first reference degree and the second reference degree may be any angle value. For example, both the first reference degree and the second reference degree are 5 degrees. Both the first fractional increment and the second fractional increment may be any value less than 1. Similarly, the first fractional increment and the second fractional increment may also be determined based on the historical energy regeneration information, and a determining principle is similar to the foregoing principle of determining the fractional increment. Therefore, after a same vehicle determines a same target regeneration intensity, target regeneration torques on an uphill, a downhill, and a flat road are different at a same vehicle speed.

The target regeneration torque obtained based on the adjustment coefficient determined based on the slope information is more accurate. In this way, on roads with different slops, vehicle deceleration values at the same target regeneration intensity and the same vehicle speed are basically the same. This ensures consistent driving experience and passenger experience when the vehicle travels on the uphill, the flat road, and the downhill. In addition, when the vehicle travels on the downhill, the basic regeneration intensity can be increased by increasing the adjustment coefficient, so that more energy can be regenerated on the downhill to charge a battery. This effectively improves an endurance capability. In addition, because the basic regeneration intensity is increased on the downhill, a deceleration value of the vehicle is large. This can reduce a quantity of braking times and reduce wear of a brake pad.

Optionally, when the regeneration torque reference information includes the quantity of passengers and the slope information, a first adjustment coefficient is determined based on the quantity of passengers, a second adjustment coefficient is determined based on the slope information, and an adjustment coefficient corresponding to the quantity of passengers and the slope information is obtained based on the first adjustment coefficient and the second adjustment coefficient. For example, if the first adjustment coefficient is X1, and the second adjustment coefficient is X2, a manner of adjusting the basic regeneration torque based on the adjustment coefficient may be as follows: the basic regeneration torque*X1*X2. In the foregoing process, the basic regeneration torque is adjusted based on the regeneration torque reference information, and the adjustment result may include an adjusted basic regeneration torque, for example, the basic regeneration torque*X1*X2.

When the regeneration torque reference information includes the historical energy regeneration information, the adjustment coefficient may be determined based on a quantity of times that the vehicle uses the energy regeneration torque of different levels and that is indicated in the historical energy regeneration information. In this embodiment of this application, a basic principle of adjusting the basic regeneration torque based on the historical energy regeneration information is as follows: collecting statistics on the preference of the driving energy regeneration intensity corresponding to the account based on the historical energy regeneration information corresponding to the logged-in account of the vehicle, or directly inputting the preference of the driving energy regeneration intensity by the driver. The energy regeneration torque is divided into a plurality of levels in descending order or ascending order, and a larger energy regeneration torque corresponds to a higher level. If the preference of the driving energy regeneration intensity corresponding to the logged-in account of the vehicle is strong energy regeneration, when the basic regeneration torque is adjusted, the basic regeneration torque tends to be increased, but the increased basic regeneration torque is not greater than an energy regeneration torque of a higher level. If the preference of the driving energy regeneration intensity corresponding to the logged-in account of the vehicle is weak energy regeneration, when the basic regeneration torque is adjusted, the basic regeneration torque tends to be decreased, but the decreased basic regeneration torque is not less than an energy regeneration torque of a current level.

For example, the initial adjustment coefficient is a third reference value, and a ratio of a quantity of times the vehicle uses the high-level energy regeneration torque to a total quantity of historical energy regeneration times is used as a large regeneration ratio, or a ratio of duration during which the vehicle performs energy regeneration based on the high-level energy regeneration torque to total historical energy regeneration duration is used as a large regeneration ratio. When the historical energy regeneration information indicates that the large regeneration ratio is greater than the first ratio, the adjustment coefficient is increased by a third fractional increment. When the historical energy regeneration information indicates that the large regeneration ratio is greater than the second ratio, the adjustment coefficient is increased by a fourth fractional increment. For another example, a ratio of a quantity of times the vehicle uses the low-level energy regeneration torque to a total quantity of historical energy regeneration times is used as a small regeneration ratio, or a ratio of duration during which the vehicle performs energy regeneration based on the low-level energy regeneration torque to total historical energy regeneration duration is used as a small regeneration ratio. When the historical energy regeneration information indicates that the small regeneration ratio is greater than a third ratio, the adjustment coefficient is decreased by a fifth fractional increment. When the historical energy regeneration information indicates that the small regeneration ratio is greater than a fourth ratio, the adjustment coefficient is decreased by a sixth fractional increment.

Optionally, the third reference value may be flexibly adjusted. For example, the third reference value is 1. The first ratio, the second ratio, the third ratio, and the fourth ratio may all be flexibly adjusted. For example, the first ratio, the second ratio, the third ratio, and the fourth ratio are all 80%, or the first ratio and the third ratio are 80%, and the second ratio and the fourth ratio are 50%. The third fractional increment, the fourth fractional increment, the fifth fractional increment, and the sixth fractional increment may all be any value less than 1. When the energy regeneration torque is divided into the plurality of levels, the third fractional increment, the fourth fractional increment, the fifth fractional increment, and the sixth fractional increment are usually less than a remainder. The remainder is a remainder of a quotient of the energy regeneration torque of the higher level and the energy regeneration torque of the current level, or the remainder is a remainder of a quotient of the energy regeneration torque of the current level and an energy regeneration torque of a lower level.

In this embodiment of this application, after the adjustment coefficient is determined, the basic regeneration torque may be adjusted based on the adjustment coefficient. For example, a product value of the adjustment coefficient and the basic regeneration torque is obtained, and the product value is the adjustment result. Alternatively, a product value of the adjustment coefficient, the basic regeneration torque, and a fixed parameter is obtained, and the product value is the adjustment result.

In a possible implementation, the obtaining the target regeneration torque of the vehicle based on an adjustment result includes: obtaining an adjusted regeneration torque based on the adjustment result; and when the adjusted regeneration torque is greater than a maximum allowable regeneration torque of the motor of the vehicle, using the maximum allowable regeneration torque as the target regeneration torque of the vehicle; or when the adjusted regeneration torque is not greater than a maximum allowable regeneration torque, using the adjusted regeneration torque as the target regeneration torque of the vehicle. Optionally, the obtaining an adjusted regeneration torque based on the adjustment result includes: using the adjusted basic regeneration torque as the adjusted regeneration torque.

Therefore, the adjusted regeneration torque obtained after the adjustment can be limited. This ensures that the finally determined target regeneration torque of the vehicle is not greater than the maximum allowable regeneration torque of the motor of the vehicle, protects the motor and the battery, and further improves accuracy of the determined target regeneration torque. In a possible implementation, the maximum allowable regeneration torque of the motor may be obtained based on a chargeable power of the battery of the vehicle and at least one of a regenerative capability and a rotational speed of the motor. An obtaining manner is not limited in this embodiment of this application. The chargeable power of the battery is determined by a state of charge (state of charge, SOC) of the battery, and a larger SOC of the battery indicates a larger chargeable power.

When the vehicle includes one motor, after the target regeneration torque of the vehicle is determined based on the target regeneration intensity, the target regeneration torque is directly allocated to the motor, and the motor performs energy regeneration based on the target regeneration torque.

When the vehicle includes a plurality of motors, after the determining a target regeneration torque of the vehicle based on the target regeneration intensity, the method further includes: determining an allocation ratio among the plurality of motors based on the road surface adhesion coefficient; and dividing the target regeneration torque into a plurality of regeneration torques based on the allocation ratio, where the plurality of regeneration torques are in one-to-one correspondence with the plurality of motors. In this case, the performing energy regeneration based on the target regeneration torque includes: controlling the plurality of motors to perform energy regeneration based on the corresponding regeneration torques.

The determining an allocation ratio among the plurality of motors based on the road surface adhesion coefficient includes but is not limited to: when the road surface adhesion coefficient is less than the coefficient threshold, determining the allocation ratio among the plurality of motors to be a fixed allocation ratio; or when the road surface adhesion coefficient is not less than the coefficient threshold, determining the allocation ratio among the plurality of motors based on the driving configuration information. At different target energy regeneration intensities, target regeneration torques obtained by different motors through allocation are different at a same vehicle speed. At a same energy regeneration intensity, target regeneration torques obtained by different motors through allocation are different when the vehicle travels on a low-adhesion road and a normal road.

For example, the vehicle includes two motors, for example, one motor for front drive and one motor for rear drive. A manner of determining the allocation ratio among the plurality of motors based on the driving configuration information may be as follows: determining an allocation ratio between the two motors based on the driving mode in the driving configuration information, a motor enabling status, motor drive efficiency, front and rear vehicle speeds, front and rear dynamic loads, the vehicle speed, and the like. The front and rear vehicle speeds are a speed of front wheels of the vehicle and a speed of rear wheels of the vehicle, and the front and rear dynamic loads are a load of a vehicle body head and a load of a vehicle tail.

Optionally, when the driving mode is energy saving, if the motor enabling status is single-motor enabled, the target regeneration torque is directly allocated to an enabled motor; or if the motor enabling status is dual-motor enabled, the allocation ratio is determined according to a principle of which total regeneration efficiency is highest, to regenerate as much energy as possible. When the driving mode is comfort or sport, the allocation ratio is determined based on at least one of the front and rear vehicle speeds and the front and rear dynamic loads, to implement optimal tire adhesion utilization and highest stability.

For example, the plurality of motors include a front motor and a rear motor. A manner of determining the allocation ratio among the plurality of motors based on the driving configuration information may be as follows: obtaining the driving mode of the vehicle based on the driving configuration information; and when the driving mode is energy saving and the motor enabling status is dual-motor enabled, determining total regeneration efficiency of the front motor and the rear motor at different allocation ratios based on the motor drive efficiency, and using an allocation ratio when the total regeneration efficiency is highest as an allocation ratio between the front motor and the rear motor; or when the driving mode is comfort or sport, obtaining a first ratio between a front-wheel vehicle speed and a rear-wheel vehicle speed, and a second ratio between a vehicle body front load and a vehicle body rear load, and determining an allocation ratio between the front motor and the rear motor based on at least one of the first ratio and the second ratio.

For example, the first ratio is directly used as an allocation ratio between a first motor and a second motor, or the second ratio is directly used as an allocation ratio between a first motor and a second motor, or an average sum of the first ratio and the second ratio is used as an allocation ratio between a first motor and a second motor.

For example, the vehicle includes three motors: one motor for front drive, and two motors on left and right sides for rear drive. In addition to determining the allocation ratio based on the two motors, a steering wheel angle and road surface adhesion statuses of wheels on two sides are considered, to improve handling stability of the vehicle. Optionally, after an allocation ratio between the front motor and the two rear motors is determined based on the foregoing dual-motor allocation manner, the target regeneration torque is further allocated to the left motor and the right motor based on an allocation ratio between the two rear motors.

For example, the plurality of motors include a front motor, a rear left motor, and a rear right motor. A manner of determining the allocation ratio among the plurality of motors based on the driving configuration information may be as follows: obtaining a front-to-rear ratio among the front motor, the rear left motor, and the rear right motor based on the driving configuration information; determining a steering direction of the vehicle based on steering wheel angle information, and determining a third ratio between the rear left motor and the rear right motor based on the steering direction; determining a fourth ratio between the rear left motor and the rear right motor based on the road surface adhesion statuses of the wheels on the left and right sides; determining a left-to-right ratio between the front motor and the rear motors based on at least one of the third ratio and the fourth ratio; and determining an allocation ratio among the front motor, the rear left motor, and the rear right motor based on the front-to-rear ratio and the left-to-right ratio.

For example, a principle of determining the third ratio between the rear left motor and the rear right motor based on the steering direction is that a ratio of motors on an inner side of the steering direction is greater than a ratio of motors on an outer side of the steering direction. A principle of determining the fourth ratio between the rear left motor and the rear right motor based on the road surface adhesion statuses of the wheels on the left and right sides is that: when the road surface adhesion statuses of the wheels on the two sides indicate different road surface adhesion ratios of the wheels on the two sides, a ratio of motors on a side with a small road surface adhesion ratio is greater than a ratio of motors on a side with a large road surface adhesion ratio.

According to the energy regeneration method provided in this embodiment of this application, the target regeneration intensity of the vehicle is determined based on the driving configuration information of the vehicle and the road surface adhesion capability of the road on which the vehicle is located. The driving configuration information can reflect personalized selection of the user, and the road surface adhesion capability can reflect an actual driving environment. Therefore, the method can meet both a user requirement and a requirement of the actual driving environment, so that the determined target regeneration intensity is more accurate. Further, the target regeneration torque determined based on the accurate target regeneration intensity is also more accurate, and effect of energy regeneration performed based on the accurate target regeneration torque is better.

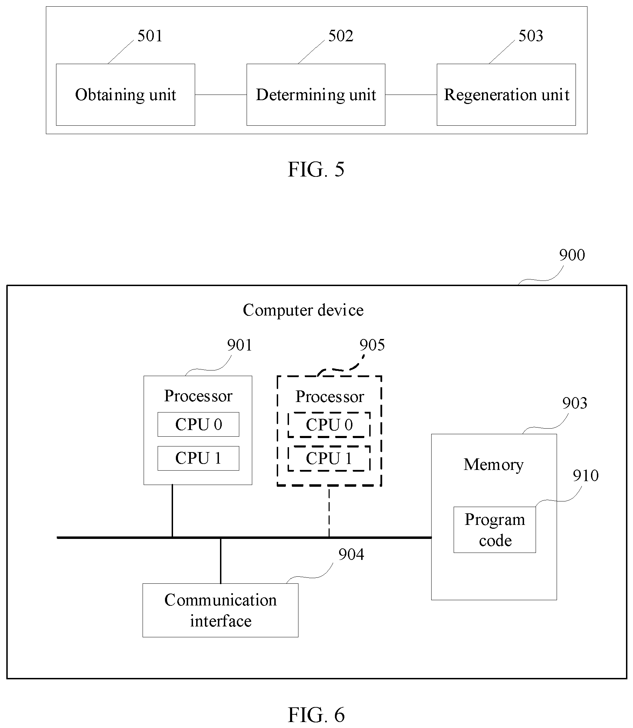

FIG. 5 is a diagram of an energy regeneration apparatus according to an embodiment of this application. The energy regeneration apparatus may be implemented as all or a part of a vehicle controller, a motor control module, or a motor controller by using software, hardware, or a combination of software and hardware. The energy regeneration apparatus may include an obtaining unit 501, a determining unit 502, and a regeneration unit 503.

The obtaining unit 501 is configured to obtain regeneration intensity reference information of a vehicle. The regeneration intensity reference information includes driving configuration information of the vehicle and a road surface adhesion capability of a road on which the vehicle is located.

The determining unit 502 is configured to determine a target regeneration intensity of the vehicle based on the regeneration intensity reference information.

The determining unit 502 is further configured to determine a target regeneration torque of the vehicle based on the target regeneration intensity.

The regeneration unit 503 is configured to perform energy regeneration based on the target regeneration torque.

In a possible implementation, the determining unit 502 is configured to: determine a configured regeneration intensity of the vehicle based on the driving configuration information; and adjust the configured regeneration intensity based on the road surface adhesion capability, and obtain the target regeneration intensity of the vehicle.

In a possible implementation, the determining unit 502 is configured to: when the road surface adhesion capability meets an instability boundary condition, use a reference regeneration intensity as the target regeneration intensity of the vehicle, where the reference regeneration intensity is less than a regeneration intensity threshold; or when the road surface adhesion capability does not meet an instability boundary condition, use the configured regeneration intensity as the target regeneration intensity of the vehicle.

In a possible implementation, the determining unit 502 is configured to obtain, based on a correspondence between driving configuration information and an energy regeneration intensity, the configured regeneration intensity that is of the vehicle and that corresponds to the driving configuration information. The driving configuration information includes at least one of a driving mode and a road mode.

In a possible implementation, the determining unit 502 is configured to: obtain a basic regeneration torque based on the target regeneration intensity and a current vehicle speed of the vehicle; obtain regeneration torque reference information corresponding to the vehicle, where the regeneration torque reference information is information that affects a deceleration value of the vehicle under the basic regeneration torque; and adjust the basic regeneration torque based on the regeneration torque reference information, and obtain the target regeneration torque of the vehicle based on an adjustment result.

In a possible implementation, an accelerator pedal of the vehicle controls acceleration and deceleration of the vehicle. The determining unit 502 is configured to obtain the basic regeneration torque based on the target regeneration intensity, the current vehicle speed of the vehicle, and an accelerator pedal opening of the vehicle.

In a possible implementation, the regeneration torque reference information includes at least one of historical energy regeneration information of the vehicle, a quantity of passengers, and slope information of the road on which the vehicle is located. The determining unit 502 is further configured to: determine an adjustment coefficient based on at least one of the historical energy regeneration information, the quantity of passengers, and the slope information, where the adjustment coefficient indicates a degree of impact of the regeneration torque reference information on the deceleration value of the vehicle; and adjust the basic regeneration torque based on the adjustment coefficient.

In a possible implementation, the determining unit 502 is configured to: obtain an adjusted regeneration torque based on the adjustment result; and when the adjusted regeneration torque is greater than a maximum allowable regeneration torque of a motor of the vehicle, use the maximum allowable regeneration torque as the target regeneration torque of the vehicle; or when the adjusted regeneration torque is not greater than a maximum allowable regeneration torque, use the adjusted regeneration torque as the target regeneration torque of the vehicle.

In a possible implementation, the obtaining unit 501 is further configured to obtain the maximum allowable regeneration torque of the motor based on a chargeable power of a battery of the vehicle and at least one of a regenerative capability and a rotational speed of the motor.

In a possible implementation, the vehicle includes a plurality of motors. The apparatus further includes:
an allocation unit, configured to: determine an allocation ratio among the plurality of motors; and divide the target regeneration torque into a plurality of regeneration torques based on the allocation ratio, where the plurality of regeneration torques are in one-to-one correspondence with the plurality of motors; and
the regeneration unit 503, configured to control the plurality of motors to perform energy regeneration based on the corresponding regeneration torques.

In a possible implementation, the allocation unit is configured to: when the road surface adhesion capability meets the instability boundary condition, determine the allocation ratio among the plurality of motors to be a fixed allocation ratio; or when the road surface adhesion capability does not meet the instability boundary condition, determine the allocation ratio among the plurality of motors based on the driving configuration information.

In a possible implementation, the obtaining unit 501 is configured to: when the vehicle meets an energy regeneration condition, obtain the regeneration intensity reference information of the vehicle.

In a possible implementation, when the accelerator pedal of the vehicle controls acceleration and deceleration of the vehicle, the energy regeneration condition includes the following content: The accelerator pedal opening of the vehicle is less than an opening threshold, a gear is a traveling gear, and a stability control function is not enabled; or when the accelerator pedal of the vehicle controls acceleration of the vehicle, and a brake pedal of the vehicle controls deceleration of the vehicle, the energy regeneration condition includes the following content: The accelerator pedal of the vehicle is not pressed, a gear is a traveling gear, and a stability control function is not enabled.

According to the energy regeneration apparatus provided in this embodiment of this application, the target regeneration intensity of the vehicle is determined based on the driving configuration information of the vehicle and the road surface adhesion capability of the road on which the vehicle is located. The driving configuration information can reflect personalized selection of a user, and the road surface adhesion capability can reflect an actual driving environment. Therefore, the apparatus can meet both a user requirement and a requirement of the actual driving environment, so that the determined target regeneration intensity is more accurate. Further, the target regeneration torque determined based on the accurate target regeneration intensity is also more accurate, and effect of energy regeneration performed based on the accurate target regeneration torque is better.

It should be noted that, when the energy regeneration apparatus provided in the foregoing embodiment works, division of the foregoing functional units is merely used as an example for illustration. During actual application, the foregoing functions can be allocated to different functional units for implementation according to a requirement. That is, an inner structure of a device is divided into different functional units to implement all or some of the functions described above. In addition, the energy regeneration apparatus provided in the foregoing embodiment and the method embodiment pertain to a same concept. For specific implementation processes thereof, refer to the method embodiment. Details are not described herein again. The foregoing descriptions of procedures corresponding to the accompanying drawings have respective focuses. For a part of a procedure that is not described in detail, refer to a related description of another procedure.

An embodiment of this application further provides a vehicle. The vehicle includes the energy regeneration apparatus shown in FIG. 5.

FIG. 6 is a diagram of a structure of a computer device 900 according to an example embodiment of this application. The computer device 900 shown in FIG. 6 is configured to perform the operations related to the energy regeneration method shown in FIG. 3. The computer device 900 may include the vehicle controller, the motor control module, or the motor controller. The computer device 900 may be implemented by using a general bus architecture.

As shown in FIG. 6, the computer device 900 includes at least one processor 901, a memory 903, and at least one communication interface 904.

The processor 901 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 901 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor may implement or execute various logical blocks, modules, and circuits described with reference to the content disclosed in embodiments of the present invention. Alternatively, the processor may be a combination for implementing a computing function, for example, a combination including one or more microprocessors, or a combination of a DSP and a microprocessor.

Optionally, the computer device 900 further includes a bus. The bus is configured to transmit information between components of the computer device 900. The bus may be a peripheral component interconnect (peripheral component interconnect, PCI for short) bus, an extended industry standard architecture (extended industry standard architecture, EISA for short) bus, or the like. The bus may be classified into an address bus, a data bus, a control bus, or the like. For ease of representation, only one bold line is used for representing the bus in FIG. 6, but this does not mean that there is only one bus or only one type of bus.

The memory 903 is, for example, a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only Memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or any other medium that can be for carrying or storing expected program code in a form of instructions or a data structure and that can be accessed by a computer. However, this is not limited thereto. For example, the memory 903 exists independently, and is connected to the processor 901 through the bus. Alternatively, the memory 903 and the processor 901 may be integrated together.

The communication interface 904 uses any apparatus such as a transceiver, and is configured to communicate with another device or a communication network. The communication network may be an Ethernet, a radio access network (RAN), a Bluetooth network, or the like. The communication interface 904 may include a wired communication interface, and may further include a wireless communication interface. In this embodiment of this application, the communication interface 904 may be used by the computer device 900 to communicate with another device.

During specific implementation, in an embodiment, the processor 901 may include one or more CPUs, for example, a CPU 0 and a CPU 1 shown in FIG. 6. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the computer device 900 may include a plurality of processors, for example, the processor 901 and a processor 905 shown in FIG. 6. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the computer device 900 may further include an output device and an input device. The output device communicates with the processor 901, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 901, and may receive an input of a user in a plurality of manners. For example, the input device may be a touchscreen device, a sensing device, or the like.

In some embodiments, the memory 903 is configured to store program code 910 for executing the solutions of this application, and the processor 901 may execute the program code 910 stored in the memory 903. That is, the computer device 900 may implement, by using the processor 901 and the program code 910 in the memory 903, the energy regeneration method provided in the method embodiment. The program code 910 may include one or more software modules. Optionally, the processor 901 may alternatively store program code or instructions for executing the solutions of this application.

In a specific embodiment, the computer device 900 in this embodiment of this application may correspond to the motor control module or the motor controller in the foregoing method embodiments. The processor 901 in the computer device 900 reads instructions in the memory 903, so that the computer device 900 shown in FIG. 6 can perform all or some operations performed by the motor control module or the motor controller.

Specifically, the processor 901 is configured to: obtain regeneration intensity reference information of a vehicle, where the regeneration intensity reference information includes driving configuration information of the vehicle and a road surface adhesion capability of a road on which the vehicle is located; determine a target regeneration intensity of the vehicle based on the regeneration intensity reference information; and determine a target regeneration torque of the vehicle based on the target regeneration intensity, and perform energy regeneration based on the target regeneration torque.

For brevity, another optional implementation is not described herein again.

The computer device 900 may further correspond to the energy regeneration apparatus shown in FIG. 5, and each functional module in the energy regeneration apparatus is implemented by using software of the computer device 900. In other words, the function modules included in the energy regeneration apparatus are generated after the processor 901 of the computer device 900 reads the program code 910 stored in the memory 903.

The steps of the energy regeneration method shown in FIG. 3 are implemented by using an integrated logic circuit of hardware in the processor of the computer device 900, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware in the processor. To avoid repetition, details are not described herein again.

An embodiment of this application further provides a chip, including an input interface, an output interface, a processor, and a memory. The input interface, the output interface, the processor, and the memory are connected to each other through an internal connection path. The processor is configured to execute code in the memory. When the code is executed, the processor is configured to perform any one of the foregoing energy regeneration methods.

It should be understood that the processor may be a CPU, or may be another general-purpose processor, a DSP, an ASIC, an FPGA or another programmable logic device, a discrete gate or a transistor logic device, a discrete hardware component, or the like. The general-purpose processor may be a microprocessor or any conventional processor or the like. It should be noted that the processor may be a processor that supports an ARM architecture.

Further, in an optional embodiment, there are one or more processors, and there are one or more memories. Optionally, the memory may be integrated with the processor, or the memory and the processor are separately disposed. The memory may include a read-only memory and a random access memory, and provide instructions and data to the processor. The memory may further include a non-volatile random access memory. For example, the memory may further store a reference block and a target block.

The memory may be a volatile memory or a non-volatile memory, or may include both a volatile memory and a non-volatile memory. The non-volatile memory may be a ROM, a PROM, an EPROM, an EEPROM, or a flash memory. The volatile memory may be a RAM, and serves as an external cache. By way of example but not limitation, many forms of RAMs are available, for example, an SRAM, a DRAM, an SDRAM, a DDR SDRAM, an ESDRAM, an SLDRAM, and a DR RAM.

An embodiment of this application further provides a computer-readable storage medium. The computer-readable storage medium stores computer instructions. When the computer instructions stored in the computer-readable storage medium are executed by a computer device, the computer device is enabled to perform the energy regeneration method provided above.

An embodiment of this application further provides a computer program product including instructions. When the computer program product runs on a computer device, the computer device is enabled to perform the energy regeneration method provided above.

All or some of the foregoing embodiments may be implemented by using software, hardware, firmware, or any combination thereof. When software is used for implementation, all or some of the embodiments may be implemented in a form of a computer program product. The computer program product includes one or more computer instructions. When the computer program instructions are loaded and executed on a computer, the procedures or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk)), or the like.

A person of ordinary skill in the art may understand that all or some of the steps of the foregoing embodiments may be implemented by using hardware or a program instructing related hardware. The program may be stored in a computer-readable storage medium. The storage medium may be a read-only memory, a magnetic disk, an optical disc, or the like.

The foregoing descriptions are merely optional embodiments of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. An energy regeneration method, wherein the method comprises:
obtaining regeneration intensity reference information of a vehicle, wherein the regeneration intensity reference information comprises driving configuration information of the vehicle and a road surface adhesion capability of a road on which the vehicle is located;
determining a target regeneration intensity of the vehicle based on the regeneration intensity reference information; and
determining a target regeneration torque of the vehicle based on the target regeneration intensity, and performing energy regeneration based on the target regeneration torque.

2. The method according to claim 1, wherein the determining a target regeneration intensity of the vehicle based on the regeneration intensity reference information comprises:
determining a configured regeneration intensity of the vehicle based on the driving configuration information; and
adjusting the configured regeneration intensity based on the road surface adhesion capability, and obtaining the target regeneration intensity of the vehicle.

3. The method according to claim 2, wherein the adjusting the configured regeneration intensity based on the road surface adhesion capability, and obtaining the target regeneration intensity of the vehicle comprises:
when the road surface adhesion capability meets an instability boundary condition, using a reference regeneration intensity as the target regeneration intensity of the vehicle, wherein the reference regeneration intensity is less than a regeneration intensity threshold; or
when the road surface adhesion capability does not meet an instability boundary condition, using the configured regeneration intensity as the target regeneration intensity of the vehicle.

4. The method according to claim 2 or 3, wherein the determining a configured regeneration intensity of the vehicle based on the driving configuration information comprises:
obtaining, based on a correspondence between driving configuration information and an energy regeneration intensity, the configured regeneration intensity that is of the vehicle and that corresponds to the driving configuration information, wherein the driving configuration information comprises at least one of a driving mode and a road mode.

5. The method according to any one of claims 1 to 4, wherein the determining a target regeneration torque of the vehicle based on the target regeneration intensity comprises:
obtaining a basic regeneration torque based on the target regeneration intensity and a current vehicle speed of the vehicle;
obtaining regeneration torque reference information corresponding to the vehicle, wherein the regeneration torque reference information is information that affects a deceleration value of the vehicle under the basic regeneration torque; and
adjusting the basic regeneration torque based on the regeneration torque reference information, and obtaining the target regeneration torque of the vehicle based on an adjustment result.

6. The method according to claim 5, wherein an accelerator pedal of the vehicle controls acceleration and deceleration of the vehicle; and the obtaining a basic regeneration torque based on the target regeneration intensity and a current vehicle speed of the vehicle comprises:
obtaining the basic regeneration torque based on the target regeneration intensity, the current vehicle speed of the vehicle, and an accelerator pedal opening of the vehicle.

7. The method according to claim 5 or 6, wherein the regeneration torque reference information comprises at least one of historical energy regeneration information of a logged-in account of the vehicle, a quantity of passengers, and slope information of the road on which the vehicle is located; and
the adjusting the basic regeneration torque based on the regeneration torque reference information comprises:
determining an adjustment coefficient based on at least one of the historical energy regeneration information, the quantity of passengers, and the slope information, wherein the adjustment coefficient indicates a degree of impact of the regeneration torque reference information on the deceleration value of the vehicle; and
adjusting the basic regeneration torque based on the adjustment coefficient.

8. The method according to any one of claims 5 to 7, wherein the obtaining the target regeneration torque of the vehicle based on an adjustment result comprises:
obtaining an adjusted regeneration torque based on the adjustment result; and
when the adjusted regeneration torque is greater than a maximum allowable regeneration torque of a motor of the vehicle, using the maximum allowable regeneration torque as the target regeneration torque of the vehicle; or
when the adjusted regeneration torque is not greater than a maximum allowable regeneration torque, using the adjusted regeneration torque as the target regeneration torque of the vehicle.

9. The method according to claim 8, wherein the method further comprises:
obtaining the maximum allowable regeneration torque of the motor based on a chargeable power of a battery of the vehicle and at least one of a regenerative capability and a rotational speed of the motor.

10. The method according to any one of claims 1 to 9, wherein the vehicle comprises a plurality of motors; and after the determining a target regeneration torque of the vehicle based on the target regeneration intensity, the method further comprises:
determining an allocation ratio among the plurality of motors; and
dividing the target regeneration torque into a plurality of regeneration torques based on the allocation ratio, wherein the plurality of regeneration torques are in one-to-one correspondence with the plurality of motors; and
the performing energy regeneration based on the target regeneration torque comprises:
controlling the plurality of motors to perform energy regeneration based on the corresponding regeneration torques.

11. The method according to claim 10, wherein the determining an allocation ratio among the plurality of motors comprises:
when the road surface adhesion capability meets the instability boundary condition, determining the allocation ratio among the plurality of motors to be a fixed allocation ratio; or
when the road surface adhesion capability does not meet the instability boundary condition, determining the allocation ratio among the plurality of motors based on the driving configuration information.

12. The method according to claim 11, wherein the plurality of motors comprise a front motor and a rear motor; and the determining the allocation ratio among the plurality of motors based on the driving configuration information comprises:
determining the driving mode of the vehicle based on the driving configuration information; and
when the driving mode is energy saving and a motor enabling status is dual-motor enabled, determining total regeneration efficiency of the front motor and the rear motor at different allocation ratios based on motor drive efficiency, and using an allocation ratio when the total regeneration efficiency is highest as an allocation ratio between the front motor and the rear motor; or
when the driving mode is comfort or sport, obtaining a first ratio between a front-wheel vehicle speed and a rear-wheel vehicle speed, and a second ratio between a vehicle body front load and a vehicle body rear load, and determining an allocation ratio between the front motor and the rear motor based on at least one of the first ratio and the second ratio.

13. The method according to claim 11, wherein the plurality of motors comprise a front motor, a rear left motor, and a rear right motor; and the determining the allocation ratio among the plurality of motors based on the driving configuration information comprises:
obtaining a front-to-rear ratio among the front motor, the rear left motor, and the rear right motor based on the driving configuration information;
determining a steering direction of the vehicle based on steering wheel angle information, and determining a third ratio between the rear left motor and the rear right motor based on the steering direction;
determining a fourth ratio between the rear left motor and the rear right motor based on road surface adhesion statuses of wheels on left and right sides;
determining a left-to-right ratio between the front motor and the rear motors based on at least one of the third ratio and the fourth ratio; and
determining an allocation ratio among the front motor, the rear left motor, and the rear right motor based on the front-to-rear ratio and the left-to-right ratio.

14. The method according to any one of claims 1 to 13, wherein the accelerator pedal of the vehicle controls acceleration and deceleration of the vehicle; and the obtaining regeneration intensity reference information of a vehicle comprises:
when the vehicle meets an energy regeneration condition, obtaining the regeneration intensity reference information of the vehicle, wherein the energy regeneration condition comprises the following content: the accelerator pedal opening of the vehicle is less than an opening threshold, a gear is a traveling gear, and a stability control function is not enabled.

15. The method according to any one of claims 1 to 13, wherein the accelerator pedal of the vehicle controls acceleration of the vehicle, and a brake pedal of the vehicle controls deceleration of the vehicle; and the obtaining regeneration intensity reference information of a vehicle comprises:
when the vehicle meets an energy regeneration condition, obtaining the regeneration intensity reference information of the vehicle, wherein the energy regeneration condition comprises the following content: the accelerator pedal of the vehicle is not pressed, a gear is a traveling gear, and a stability control function is not enabled.

16. An energy regeneration apparatus, wherein the apparatus comprises:
an obtaining unit, configured to obtain regeneration intensity reference information of a vehicle, wherein the regeneration intensity reference information comprises driving configuration information of the vehicle and a road surface adhesion capability of a road on which the vehicle is located;
a determining unit, configured to determine a target regeneration intensity of the vehicle based on the regeneration intensity reference information, wherein
the determining unit is further configured to determine a target regeneration torque of the vehicle based on the target regeneration intensity; and
a regeneration unit, configured to perform energy regeneration based on the target regeneration torque.

17. A vehicle, wherein the vehicle comprises the energy regeneration apparatus according to claim 16.

18. A computer device, wherein the computer device comprises a processor and a memory, the memory stores at least one computer program or instruction, and the at least one computer program or instruction is loaded and executed by the processor, so that the computer device implements instructions of the method according to any one of claims 1 to 15.

19. A computer-readable storage medium, wherein the computer-readable storage medium is configured to store program code executed by a processor, and the program code comprises instructions for implementing the method according to any one of claims 1 to 15.

20. A computer program product, wherein the computer program product comprises computer program code, and the computer program code is loaded and executed by a computer, so that the computer implements the method according to any one of claims 1 to 15.
